(19) Europäisches Patentamt
European Patent Office
Office européen des brevets

(11) **EP 2 753 091 A1**

(12) **EUROPEAN PATENT APPLICATION**

(43) Date of publication:
09.07.2014 Bulletin 2014/28

(51) Int Cl.:
*H04N 19/85* (2014.01)     *H04N 19/136* (2014.01)
*H04N 19/18* (2014.01)     *H04N 19/186* (2014.01)

(21) Application number: 12306291.1

(22) Date of filing: 18.10.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Thomson Licensing**
**92130 Issy-les-Moulineaux (FR)**

(72) Inventors:
• **Bordes, Philippe**
**35576 Cesson-Sévigné (FR)**

• **Andrivon, Pierre**
**35576 Cesson-Sévigné (FR)**
• **Lopez, Patrick**
**35576 Cesson-Sévigné (FR)**
• **Salmon, Philippe**
**35576 Cesson-Sévigné (FR)**
• **Hiron, Franck**
**35576 Cesson-Sévigné (FR)**

(74) Representative: **Perrot, Sébastien**
**Technicolor**
**1-5 rue Jeanne d'Arc**
**92130 Issy Les Moulineaux (FR)**

(54) **Method for coding and decoding a video and corresponding devices**

(57)     A method for coding a video is disclosed. The method comprises for at least one current picture of the video :
- decorrelating (12) at least two color components of the current picture into decorrelated components; and
- coding (14) data relative to the decorrelation and the decorrelated components into a bitstream.

FIGURE 1

EP 2 753 091 A1

**Description**

1. FIELD OF THE INVENTION

The invention relates to video coding. More precisely, a coding method and a video encoder for coding a video comprising pictures represented with at least two color components is disclosed. Corresponding decoding method and video decoder are further disclosed.

2. BACKGROUND OF THE INVENTION

It is known in the prior art to encode pictures represented in a given color space. Usually, the pictures are captured in a first color space (e.g. RGB) and are then transformed in a second color space (e.g. YUV) different from the first color space in order to separate the signal information the human eye is more sensitive to (e.g. luminance) from the other signal information (e.g. chrominance). The transformed pictures are finally encoded. Several transforms exist (depending on different standards such as SMPTE, ITU).The transform is usually fixed for a set of applications (ex: TV broadcast) and independent of the video content. Consequently, the coding of such transformed pictures is not always efficient.

3. BRIEF SUMMARY OF THE INVENTION

The purpose of the invention is to overcome at least one of the disadvantages of the prior art. For this purpose, a method for coding a video is disclosed. The method comprises for at least one picture of the video:

-  decorrelating at least two color components of the current picture into decorrelated components; and
-  coding data relative to the decorrelation and the decorrelated components into a bitstream.

Advantageously, the data relative to the decorrelation are determined based on the at least two color components. This make is possible to adapt the decorrelation process to the content of the video.

According to a specific embodiment, decorrelating the at least two color components comprises applying to the current picture a color transform defined by parameters determined such that the decorrelation between the at least two color components of the current picture is increased when the transform is applied on the current picture.

According to a specific characteristic of the invention, the data relative to the decorrelation are the parameters defining the color transform.

According to a variant, the data relative to the decorrelation are parameters defining an inverse transform of the color transform.

Advantageously, the data relative to the decorrelation are encoded only at random access points and wherein the color transform is applied to all pictures of the video following the random access point until a next random access point before their encoding.

According to another aspect of the invention, the video is divided into groups of pictures and the parameters defining the color transform are further determined from pictures of the group of pictures to which the current picture belongs so as to increase decorrelation between the at least two color components of the pictures of the group of pictures when the transform is applied to the pictures of the group of pictures.

According to a specific embodiment, the coding method further comprises increasing bitdepth of the at least two color components and wherein decorrelating is applied on the at least two color components of increased bitdepth.

A method for decoding a bitstream coding a video is also disclosed. The method comprises for at least one current picture of the video:

-  decoding from the bitstream data relative to a decorrelation between at least two color components of the current picture and the at least two color components; and
-  processing the at least two color components based on the data relative to the decorrelation.

According to a specific embodiment, processing the at least two color components comprises applying to the current picture a color transform defined by the data relative to the decorrelation.

According to a first variant, processing the at least two color components comprises applying to the current picture a color transform inverse of a color transform defined by the data relative to the decorrelation.

According to a second variant, processing the at least two color components comprises reconstructing parameters of a transform from the data relative to the decorrelation and applying to the current picture a color transform defined by the parameters.

Advantageously, the data relative to the decorrelation are decoded only at random access points and wherein the processing is applied to all pictures of the video following the random access point until a next random access point. Advantageously, the decoding method further comprises decreasing bitdepth of the at least two color components after processing the at least two color components.

A bitstream coding a video is disclosed. The bitstream carries data relative to a decorrelation between at least two color components of a picture of the video.

A video coder for coding a video is further disclosed that comprises :

- means for decorrelating at least two color components of a current picture of the video into decorrelated components; and
- means for coding data relative to the decorrelation and the decorrelated components into a bitstream.

A video decoder for decoding a bitstream coding a video is further disclosed that comprises:

- means for decoding from the bitstream data relative to a decorrelation between at least two color components of a current picture of the video and for decoding from the bitstream the at least two color components; and
- means for processing the at least two color components based on the data relative to the decorrelation.

4. BRIEF DESCRIPTION OF THE DRAWINGS

Other features and advantages of the invention will appear with the following description of some of its embodiments, this description being made in connection with the drawings in which:

- Figures 1 and 2 depict flowcharts of an encoding method according to the invention;
- Figure 3 and 4 depict flowcharts of a decoding method according to the invention;
- Figure 5 depicts a video encoder according to the invention; and
- Figure 6 depicts a video decoder according to the invention.

5. DETAILED DESCRIPTION OF THE INVENTION

The invention relates to a method for coding a video. The video is made up of pictures. Each picture is represented with at least two color components. A color component is for example a luma component or a chroma component.

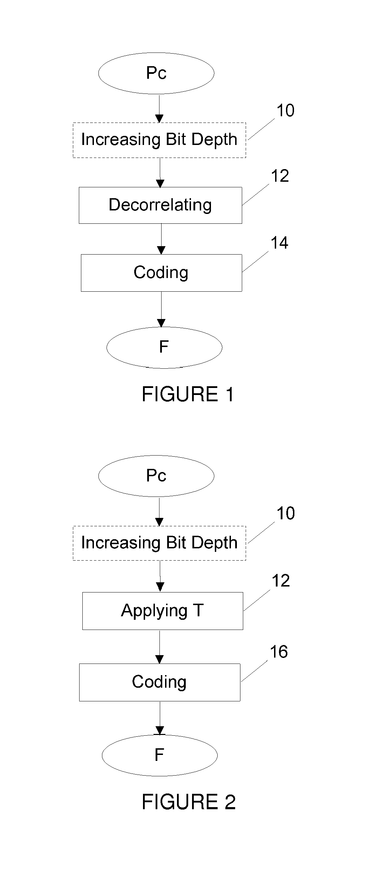

Figure 1 depicts a flowchart of the encoding method according to the invention. At a step 12, the two color components of a picture of the video are more decorrelated, i.e. the correlation between the two color components is reduced.

At a step 14, data relative to the decorrelation are encoded into a bitstream. The data relative to the decorrelation are encoded for example in a group of pictures header (also known as GOP header) or in a sequence parameter set (also known as PPS). Such a GOP header is defined in section 6.2.2.6 of MPEG2 standard ISO/IEC 13818-2:2000. Such a sequence parameter set is defined in sections 3.131 and 7.3.2.1 of H.264 standard ISO/IEC 14496-10:2005. The invention is not limited to MPEG-2 and H.264. Indeed, such data relative to the decorrelation can be encoded at GOP or picture level in any future standard such as HEVC ISO/IEC 23008-2. According to a variant the data relative to the decorrelation are encoded in a picture header or in a picture parameter set as defined in section 7.3.2.2 of ISO/IEC 14496-10:2005. The decorrelated two color components are also encoded into the bitstream. Encoding the decorrelated color components comprises for example predicting them, computing a residue between the color components and the prediction, transforming/quantizing the residue and encoding the quantized residue with an entropy coder. These steps are well known to those skilled in the art of video compression and are not disclosed further. According to a specific characteristic, the data relative to the decorrelation are only encoded at random access points. These random access points are for example pictures of IDR type ("Instantaneous Decoding Refresh") or I type in a stream in accordance with the MPEG4 AVC standard also known by the name H.264 defined in the document ISO/IEC 14496-10 entitled "Information technology -- Coding of audio-visual objects -- Part 10: Advanced Video Coding". RAPs are also transport packets TS marked RAI ("Random Access Indicator") in the MPEG2-TS transport layer defined in the document ITU T Rec. H.222.0 | ISO/IEC 13818 1 (2rd edition, 2000) entitled "information Technology - Generic Coding of moving pictures and associated audio: Systems".

According to another specific characteristic, the decorrelation applies only on chroma components. In this case, a luma component remains unchanged.

Advantageously, the data relative to the decorrelation are determined based on the two color components. Therefore, the decorrelation process is adapted to the encoded video content. By adapting the decorrelation process to the picture to be encoded, the two color components are more decorrelated than when using state of the art color transforms that are not adapted to all video content.

According to a variant, the bitdepth of the picture is increased. More precisely, the bitdepth of the two color components is increased before decorrelating them. In this case, the decorrelation applies on the two color components of increased bitdepth. The data relative to the decorrelation are also determined based on the two color components of increased bitdepth.

Figure 2 depicts a flowchart of the encoding method according to a specific embodiment of the invention.

At step 12, decorrelating the two color components comprises applying to the current picture to be coded a color transform defined by parameters determined such that the deccorrelation between the two color components is increased when the transform is applied on a current picture I1.

The picture I1 being represented with three color components (e.g. one luma component Y1 and two chroma components U1 and V1), the picture is transformed into a transformed picture I2 by applying a transform M as depicted on figure 2. According to a specific aspect of the invention the transform M is linear and defined by parameters $m_{00}$, $m_{01}$, $m_{02}$, $m_{10}$, $m_{11}$, $m_{12}$, $m_{20}$, $m_{21}$ and $m_{22}$, and optionally Yoff, Uoff and Voff. In this case,

$$\begin{bmatrix} Y2 \\ U2 \\ V2 \end{bmatrix} = \begin{bmatrix} m_{00} & m_{01} & m_{02} \\ m_{10} & m_{11} & m_{12} \\ m_{20} & m_{21} & m_{22} \end{bmatrix} \begin{bmatrix} Y_1 \\ U_1 \\ V_1 \end{bmatrix} + \begin{bmatrix} Y_{off} \\ U_{off} \\ V_{off} \end{bmatrix} = M \begin{pmatrix} Y_1 \\ U_1 \\ V_1 \end{pmatrix}$$

The parameters are for example determined from the current picture I1 by a method of Principal Component Analysis (PCA) or a method of Independent Component Analysis (ICA). PCA is a method disclosed in a document from Jonathon Shlens entitled "A Tutorial on Principal Component Analysis_". ICA is described in a document from Comon, Pierre entitled "Independent Component Analysis: a new concept?", and published in Signal Processing, 36(3):287-314, April 1994. According to a variant, the parameters are determined not only from the current picture I1 but also from pictures preceding the current picture, following it or surrounding it. As an example, the video being divided in groups of pictures known as GOP, the parameters of the transform are determined from all the pictures of the GOP to which I1 belong.

When the transform is a rotation defined by at least one rotation angle θ,, the rotation axis being known, the only parameter to encode in the bitstream is the angle θ. The rotation may be further defined by several angles. The several angles are then encoded in the bitstream.

According to a specific embodiment the parameters $m_{00}$, $m_{01}$, $m_{02}$, $m_{10}$, $m_{11}$, $m_{12}$, $m_{20}$, $m_{21}$ and $m_{22}$, and optionally Yoff, Uoff and Voff of the linear transform are the data relative to the decorrelation and thus are encoded into the bitstream at step 14. According to a variant, the parameters of the inverse transform of M are the data relative to the decorrelation and thus are encoded into the bitstream. According to another variant, the parameters $m_{00}$, $m_{01}$, $m_{02}$, $m_{10}$, $m_{11}$, $m_{12}$, $m_{20}$, $m_{21}$ and $m_{22}$, and optionally Yoff, Uoff and Voff are not directly encoded into the bitstream. In this case, the data relative to the decorrelation that are encoded into the bitstream are parameters allowing to reconstruct the parameters $m_{00}$, $m_{01}$, $m_{02}$, $m_{10}$, $m_{11}$, $m_{12}$, $m_{20}$, $m_{21}$ and $m_{22}$. For example, when the transform is a rotation defined by a rotation angle θ, the parameter to encode in the bitstream is the angle θ. From the angle θ, one is able to reconstruct $m_{00}$, $m_{01}$, $m_{02}$, $m_{10}$, $m_{11}$, $m_{12}$, $m_{20}$, $m_{21}$ and $m_{22}$.

When the decorrelation applies only on chroma components, the number of data relative to the decorrelation process that have to be encoded is decreased. Indeed, only parameters $m_{10}$, $m_{11}$, $m_{12}$, $m_{20}$, $m_{21}$ and $m_{22}$. (or $m_{11}$, $m_{12}$, $m_{21}$ and $m_{22}$) and possibly Uoff and Voff are encoded.

Advantageously, the same transform is applied to all pictures of the video following a random access point until a next random access point. Such a random access point can be an IDR (stands for Instantaneous Decoding Refresh) as defined in H.264. In the same way, such a random access point is a random access picture as defined in HEVC. Consequently, the parameters of the color transform or of its inverse are only encoded at random access points (or RAP)..

When the decorrelation applies only on the chroma components, only parameters $m_{10}$, $m_{11}$, $m_{12}$, $m_{20}$, $m_{21}$ and $m_{22}$, Uoff and Voff are encoded into the bitstream.

The method according to the invention makes it possible to encode and thus transmit to a decoder a color transform that is adapted to the video content to be encoded. Consequently, the encoding is more efficient since the color components are better decorrelated.

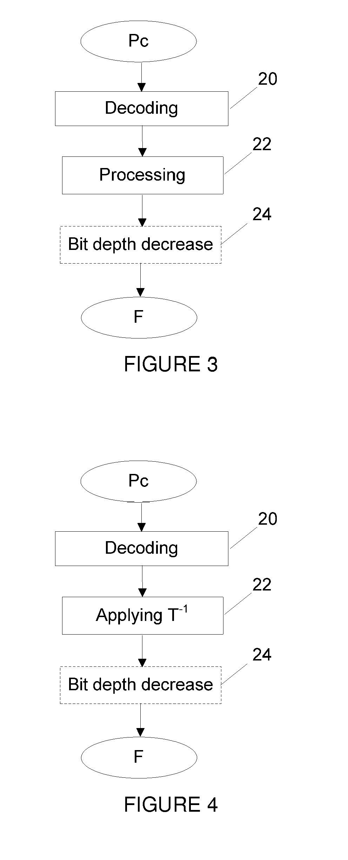

Figure 3 depicts a flowchart of the decoding method according to the invention. In a step 20, data relative to a decorrelation between at least two color components of a picture are decoded from a bitstream coding a video. The data relative to the decorrelation are for example decoded from a GOP header or from a sequence parameter set. Such sequence parameter set is defined in sections 3.131 and 7.3.2.1 of the document ISO/IEC 14496-10:2005. According to a variant such parameters are decoded from a picture header or in a picture parameter set as defined in section 7.3.2.2 of ISO/IEC 14496-10:2005. The invention is not limited to MPEG-2 and H.264. Indeed, such data relative to the decorrelation can be encoded art GOP or picture level in any future standard such as HEVC. The two color components are also decoded from the bitstream. This step is the inverse of step 14. Decoding the two color components usually comprises decoding residues using an entropy decoder, dequantizing the residues, applying an inverse transform (e.g. an inverse DCT), computing a prediction and reconstructing the color components of the picture from the residues after applying the transform and the prediction. These steps are well known to those skilled in the art of video compression and are not disclosed further. According to a specific characteristic, the data relative to the decorrelation are only decoded at random access points.

In a step 22, the reconstructed color components are further processed based on the decoded data relative to the decorrelation. This step is the inverse of step 12 of figure 1 and thus makes it possible to restore the original inter-correlation between the at least two color components. All the variants and embodiments disclosed for the encoding method apply for the decoding method. According to a specific characteristic, only chrominance components are processed. In this case, a luminance component remains unchanged. According to a variant, the bitdepth of the picture is decreased at a step 24 after step 22. More precisely, the bitdepth of the two processed color components is decreased.

Figure 4 depicts a flowchart of the decoding method according to a specific embodiment of the invention.

According to a specific embodiment parameters $m_{00}$, $m_{01}$, $m_{02}$, $m_{10}$, $m_{11}$, $m_{12}$, $m_{20}$, $m_{21}$ and $m_{22}$, and optionally Yoff, Uoff and Voff of the linear transform M are the data relative to the decorrelation that are decoded from the bitstream at step 20. According to a variant, the parameters $m_{00}$, $m_{01}$, $m_{02}$, $m_{10}$, $m_{11}$, $m_{12}$, $m_{20}$, $m_{21}$ and $m_{22}$, and optionally Yoff, Uoff and Voff of the inverse transform $M^{-1}$ of M are the data relative to the decorrelation that are decoded from the bitstream. According to another variant, the parameters of the inverse transform $M^{-1}$ are reconstructed from the decoded data relative to the decorrelation. For example, when the transform is a rotation defined by at least one rotation angle $\theta$, the rotation axis being known, the decoded data relative to the decorrelation is the angle $\theta$. From the angle $\theta$, one is able to reconstruct $m_{00}$, $m_{01}$, $m_{02}$, $m_{10}$, $m_{11}$, $m_{12}$, $m_{20}$, $m_{21}$ and $m_{22}$ of the inverse transform.

At step 22, processing the two color components comprises applying to the reconstructed current picture the color transform $M^{-1}$ inverse of the color transform applied at step 12. It makes it possible to restore the original inter-correlation between the at least two color components by applying the inverse transform $M^{-1}$ of the transform M applied on the encoder side at step 12 of figure 2. The picture I'2 being represented with three color components (e.g. one luminance component Y2 and two chrominance components U2 and V2), the picture is transformed into a transformed picture I'1 by applying a transform $M^{-1}$ as depicted on figure 4. In this case,

$$\begin{bmatrix} Y'_1 \\ U'_1 \\ V'_1 \end{bmatrix} = M^{-1} \begin{pmatrix} Y'_2 \\ U'_2 \\ V'_2 \end{pmatrix}$$

Advantageously, the same transform $M^{-1}$ is applied to all pictures of the video following a random access point until a next random access point. Consequently, the parameters of the color transform or of its inverse are only decoded at random access points (or RAP).

When the decorrelation applies only on the chrominance components, only parameters $m_{10}$, $m_{11}$, $m_{12}$, $m_{20}$, $m_{21}$ and $m_{22}$, (or $m_{11}$, $m_{12}$, $m_{21}$ and $m_{22}$) and possibly Uoff and Voff of M or $M^{-1}$ are decoded from the bitstream.

The invention further relates to a bitstream. Such a bitstream codes a video and carries data relative to a decorrelation between at least two color components of a picture of the video. Advantageously, the data relative to the decorrelation are determined based on the two color components. According to a specific embodiment, the data relative to the decorrelation are parameters of a transform M determined such that the decorrelation between at least two color components of the picture is increased when the transform is applied on the picture. According to a variant, the data relative to the decorrelation are parameters of an inverse transform of M.

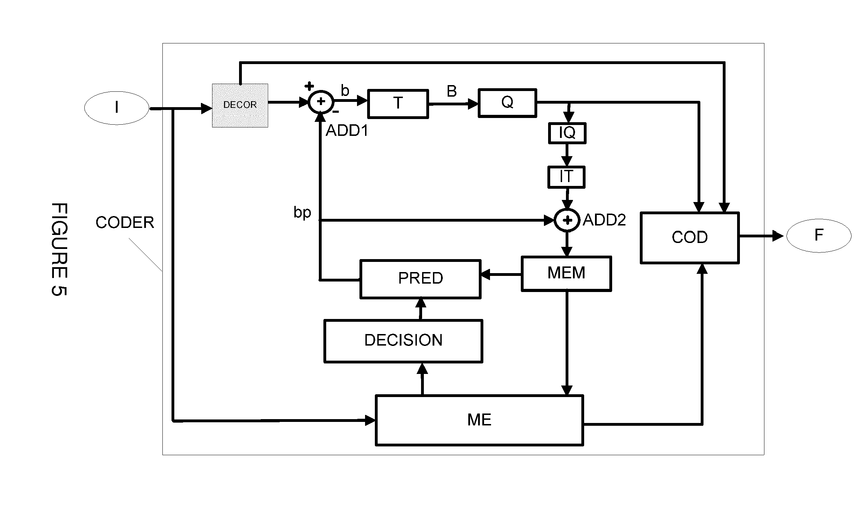

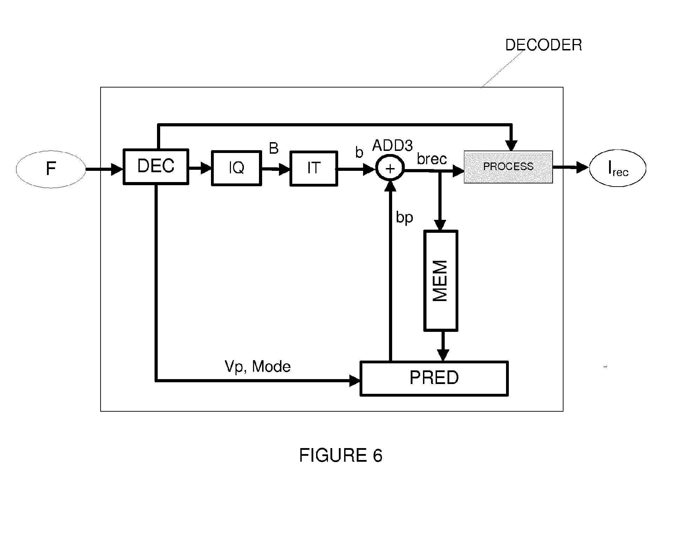

Figure 5 depicts a video encoder CODER according to the invention. Figure 6 depicts a video decoder DECODER for decoding a bitstream F representative of the video. In these figures, the modules shown are functional units that may or may not correspond to physically distinguishable units. For example, these modules or some of them can be grouped together in a single component, or constitute functions of the same software. On the contrary, some modules may be composed of separate physical entities.

With reference to figure 5, the video encoder CODER receives as input pictures I belonging to a video. The video encoder comprises a module DECOR that is able to decorrelate at least two color components of the picture I. The output of the DECOR module is connected to a calculation module ADD1. The output of the DECOR module is further connected to the input of an entropy coding module COD. The module DECOR implements the step 12 of the encoding method according to the invention. The video encoder CODER notably implements a coding with temporal prediction. Only the modules of the coding device CODER relating to coding by temporal prediction or INTER coding are represented in figure 5. Other modules not represented and known to those skilled in the art of video coders implement the INTRA coding with or without spatial prediction. The video encoder CODER notably comprises a calculation module ADD1 able to extract, for example by subtraction pixel by pixel, from a current block $b_{cur}$ a prediction block bp to generate a block of residues b. The video encoder further comprises a transformation module T able to transform with a transform T the block of residues b into a block of coefficients B. The transform T is for example a DCT. The output of the transformation module T is connected to the input of a quantization module Q able to quantize the block of coefficients B into quantized data. The output of the quantization module is connected to the input of the entropy coding module COD able to code the quantized data into a bitstream F. The step 14 is thus implement by the modules ADD1, T, Q and COD. It further comprises a module IQ performing the inverse operation of the quantization module Q. The module IQ is connected to a module IT performing the inverse operation of the transformation module T. The output of the module IT is connected to a calculation module ADD2 capable of adding pixel by pixel the block of data from the module IT and the prediction block bp to generate a reconstructed block that is stored in a memory MEM. The coding device CODER also comprises a motion estimation module ME able to estimate at least one motion vector Vp between the block $b_{cur}$ and a reference image Ir stored in the memory MEM, this image having previously been coded then reconstructed. According to one variant, the motion estimation can be made between the current block bc and the source image corresponding to Ir, in which case the memory MEM is not connected to the motion estimation module ME. According to a method well known to those skilled in the art, the motion estimation module searches in the reference image Ir, respectively in the corresponding source image, for a motion vector so as to minimise an error calculated between the current block $b_{cur}$ and a block in the reference image Ir, respectively in the corresponding source image, identified using said motion vector. According to one variant, the motion vector is determined by phase correlation or overall motion estimation or even by "template matching". The motion data is transmitted by the motion estimation module ME to a decision module DECISION able to select a coding mode for the block $b_{cur}$ in a predefined set of coding modes. The chosen coding mode is for example the one that minimizes a bitrate-distortion type criterion. However, the invention is not restricted to this selection method and the mode chosen can be selected according to another criterion for example an a priori type criterion. The coding mode selected by the decision module DECISION as well as the motion data, for example the motion vector or vectors in the case of the temporal prediction mode or INTER mode are transmitted to a prediction module PRED. The motion vector or vectors and the selected coding mode are moreover transmitted to the entropy coding module COD to be coded in the stream F. If a prediction mode INTER is retained by the decision module DECISION, the prediction module PRED then determines in the reference image Ir previously reconstructed and stored in the memory MEM, the prediction block bp from the motion vector determined by the motion estimation module ME. If a prediction mode INTRA is retained by the decision module DECISION, the prediction module PRED determines in the current image, among the blocks previously coded and stored in the memory MEM, the prediction block bp.

Figure 6 depicts a video decoder according to the invention. The video decoder DECODER receives at input a bitstream F representative of a video. The bitstream F is for example transmitted by an encoder CODER such as the one depicts on figure 5. The decoder DECODER comprises an entropy decoding module DEC able to generate decoded data, for example coding modes and decoded data relating to the content of the pictures. The entropy decoding module DEC is also able to decode data relative a decorrelation between two color components of a picture of the video. The decoding device DECODER further comprises a motion data reconstruction module. According to a first embodiment, the motion data reconstruction module is the entropy decoding module DEC that decodes a part of the stream F representative of motion vectors.

According to a variant not shown in figure 6, the motion data reconstruction module is a motion estimation module. This solution for reconstructing motion data by the decoding device DECOD is known as "template matching". The decoded data relating to the content of the images is then sent to an inverse quantization module IQ able to perform an inverse quantization of the decoded data to obtain a block of coefficients B. The module IQ is connected to a transformation IT module able to perform an inverse transformation to the one performed by the module T of the coding device CODER. The modules IQ and IT are identical to the modules IQ respectively IT of the coding device CODER having generated the bitstream F. The module IT is connected to a calculation module ADD3 able to merge, for example by pixel to pixel addition, the block of residues b from the module IT and a prediction block bp to generate a reconstructed block $b_{rec}$ that is stored in a memory MEM. The step 20 of the decoding method is implemented in the modules DEC, IQ, IT and ADD3. The decoding device DECODER also comprises a prediction module PRED identical to the prediction module PRED of the coding device CODER. If a prediction mode INTER is decoded, the prediction module PRED determines in a reference image Ir previously reconstructed and stored in the memory MEM, the prediction block $b_{cur}$ by the entropy decoding module DEC. If a prediction mode INTRA is decoded, the prediction module PRED determines in the current image among the blocks previously reconstructed and stored in the memory MEM, the prediction block bp. Finally, the decoder DECODER comprises a processing module PROCESS that implements the step 22 of the decoding method according to the invention. More precisely the processing module PROCESS is able to process the reconstructed pictures, i.e. those pictures output from the module ADD3 based on the data relative to the decorrelation. This module thus applies the inverse process of the process applied in the encoder by the module DECOR.

The video coder and video decoder according to the invention are for example implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system. In addition, various other peripheral devices may be connected to the computer platform such as an additional data storage device and a printing device.

According to variants, the video encoder and decoder according to the invention are implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components integrated into a device or even in a form of a mix of hardware elements and software elements.

**Claims**

1.  A method for coding a video comprising for at least one current picture of the video :

    - decorrelating (12) at least two color components of said current picture into decorrelated components; and
    - coding (14) data relative to said decorrelation and the decorrelated components into a bitstream.

2.  The method of claim 1, wherein said data relative to said decorrelation are determined (12) based on said at least two color components.

3.  The method according to claim 1, wherein decorrelating (12) said at least two color components comprises applying to said current picture a color transform defined by parameters determined such that the decorrelation between said at least two color components of said current picture is increased when said transform is applied on said current picture.

4.  The method according to claim 3, wherein said data relative to the decorrelation are the parameters defining said color transform.

5.  The method according to claim 3, wherein said data relative to the decorrelation are parameters defining an inverse transform of said color transform.

6.  The method according to any of claims 3 to 5, wherein said data relative to said decorrelation are encoded only at random access points and wherein said color transform is applied to all pictures of the video following said random access point until a next random access point before their encoding.

7.  The method according to any of claims 3 to 6, wherein the video being divided into groups of pictures, said parameters defining said color transform are further determined from pictures of the group of pictures to which said current picture belongs so as to increase decorrelation between said at least two color components of said pictures of said group of pictures when said transform is applied to said pictures of said group of pictures.

8.  The method according to any claims 1 to 7, further comprising increasing bitdepth of said at least two color components and wherein decorrelating is applied on said at least two color components of increased bitdepth.

9.  A method for decoding a bitstream coding a video comprising for at least one current picture of the video:

    - decoding (20) from said bitstream data relative to a decorrelation between at least two color components of said current picture and said at least two color components; and
    - processing (22) said at least two color components based on said data relative to the decorrelation.

10. The method according to claim 9, wherein processing (22) said at least two color components comprises applying to said current picture a color transform defined by said data relative to the decorrelation.

11. The method according to claim 9, wherein processing (22) said at least two color components comprises applying to said current picture a color transform inverse of a color transform defined by said data relative to the decorrelation.

12. The method according to claim 9, wherein processing (22) said at least two color components comprises reconstructing parameters of a transform from said data relative to the decorrelation and applying to said current picture a color transform defined by said parameters.

13. The method according to any of claims 10 to 12, wherein said data relative to said decorrelation are decoded only at random access points and wherein said processing is applied to all pictures of the video following said random access point until a next random access point.

14. The method according to any claims 9 to 13, further comprising decreasing bitdepth of said at least two color components after processing said at least two color components.

15. A bitstream coding a video, wherein the bitstream carries data relative to a decorrelation between at least two color components of a picture of said video.

16. A video coder for coding a video comprising :

  - means for decorrelating at least two color components of a current picture of said video into decorrelated components; and
  - means for coding data relative to said decorrelation and the decorrelated components into a bitstream.

17. The video coder according to claim 16, wherein said video coder is adapted to execute the steps of the coding method according to any of claims 1 to 8.

18. A video decoder for decoding a bitstream coding a video comprising:

  - means for decoding from said bitstream data relative to a decorrelation between at least two color components of a current picture of said video and for decoding from said bitstream said at least two color components; and
  - means for processing said at least two color components based on said data relative to the decorrelation.

19. The decoding device according to claim 18, wherein said decoding device is adapted to execute the steps of the decoding method according to any of claims 9 to 14.

Pc

Increasing Bit Depth — 10

Decorrelating — 12

Coding — 14

F

FIGURE 1

Pc

Increasing Bit Depth — 10

Applying T — 12

Coding — 16

F

FIGURE 2

Pc

Decoding — 20

Processing — 22

Bit depth decrease — 24

F

FIGURE 3

Pc

Decoding — 20

Applying T$^{-1}$ — 22

Bit depth decrease — 24

F

FIGURE 4

FIGURE 5

FIGURE 6

Europäisches
Patentamt

European
Patent Office

Office européen
des brevets

# EUROPEAN SEARCH REPORT

Application Number

EP 12 30 6291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 144 432 A1 (PANASONIC CORP [JP]) 13 January 2010 (2010-01-13) * abstract; figures 4a, 4b * * paragraph [0002] - paragraph [0007] * * paragraph [0016] - paragraph [0047] * * paragraph [0055] - paragraph [0064] * * paragraph [0095] - paragraph [0103] * ----- | 1-19 | INV. H04N7/26 |
| A | Ying Chen ET AL: "Optimal Transform in Perceptually Uniform Color Space and Its Application in Image Coding" In: "Image Analysis and Recognition", 1 January 2004 (2004-01-01), Springer, Berlin, Heidelberg, XP055056953, ISSN: 0302-9743 ISBN: 978-3-54-045234-8 vol. 3211, pages 269-276, DOI: 10.1007/978-3-540-30125-7_34, * abstract * * sect. 2.1 * ----- | 8,14 | |
| A | ROUMEN KOUNTCHEV ET AL: "New method for adaptive karhunen-loeve color transform", INTERNATIONAL CONFERENCE ON TELECOMMUNICATION IN MODERN SATELLITE, CABLE, AND BROADCASTING SERVICES, TELSIKS '09. IEEE, PISCATAWAY, NJ, USA, 7 October 2009 (2009-10-07), pages 209-216, XP031573422, ISBN: 978-1-4244-4382-6 * the whole document * ----- | 1-19 | TECHNICAL FIELDS SEARCHED (IPC) H04N |

-/--

The present search report has been drawn up for all claims

| Place of search | Date of completion of the search | Examiner |
|---|---|---|
| The Hague | 19 March 2013 | Streich, Sebastian |

Europäisches
Patentamt

European
Patent Office

Office européen
des brevets

# EUROPEAN SEARCH REPORT

Application Number

EP 12 30 6291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | COMON ET AL: "Independent component analysis, A new concept?", SIGNAL PROCESSING, ELSEVIER SCIENCE PUBLISHERS B.V. AMSTERDAM, NL, vol. 36, no. 3, 1 April 1994 (1994-04-01), pages 287-314, XP026650306, ISSN: 0165-1684, DOI: 10.1016/0165-1684(94)90029-9 [retrieved on 1994-04-01] * the whole document *<br>-----| 1-19 | |

TECHNICAL FIELDS
SEARCHED      (IPC)

The present search report has been drawn up for all claims

| Place of search | Date of completion of the search | Examiner |
|---|---|---|
| The Hague | 19 March 2013 | Streich, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 6291

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2013

| Patent document cited in search report | | Publication date | Patent family member(s) | | Publication date |
|---|---|---|---|---|---|
| EP 2144432 | A1 | 13-01-2010 | CN | 101796843 A | 04-08-2010 |
| | | | EP | 2144432 A1 | 13-01-2010 |
| | | | EP | 2299715 A1 | 23-03-2011 |
| | | | KR | 20110025888 A | 14-03-2011 |
| | | | US | 2010208989 A1 | 19-08-2010 |
| | | | WO | 2010004726 A1 | 14-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- information Technology - Generic Coding of moving pictures and associated audio: Systems. ITU T Rec. H.222.0 | ISO/IEC 13818 1. 2000
- **JONATHON SHLENS.** *A Tutorial on Principal Component Analysis*

- **COMON, PIERRE.** Independent Component Analysis: a new concept?. *Signal Processing,* April 1994, vol. 36 (3), 287-314